# EUROPEAN PATENT APPLICATION

(11) **EP 3 093 443 A1**
(43) Date of publication of application: **16.11.2016**
(21) Application number: 16168718.1
(22) Date of filing: 09.05.2016
(51) Int. Cl.: F01D 9/04, F01D 17/16, F02K 3/06, F04D 29/56

(54) **TURBINE ENGINE HAVING VARIABLE PITCH OUTLET GUIDE VANES**

(30) Priority: 11.05.2015 US 201514708878
(71) Applicant: General Electric Company, Schenectady, NY 12345 (US)
(72) Inventor: MILLER, Brandon Wayne, Cincinnati, OH Ohio 45215 (US); BREEZE-STRINGFELLOW, Andrew, Cincinnati, OH Ohio 45215 (US); ZATORSKI, Darek Tomasz, Cincinnati, OH Ohio 45215 (US)
(74) Representative: Williams, Andrew Richard

(57) **Abstract**

A gas turbine engine (10) including a core engine (16) and a fan (38) configured in mechanical communication with the core engine (16) is provided. The gas turbine engine (10) also includes a plurality of outlet guide vanes (50) positioned downstream from the fan (38) along an axial direction (A) defined by the gas turbine engine (10). The plurality of outlet guide vanes (50) extend outwardly from an outer casing (18) the core engine (16) generally along the radial direction (R) defined by the gas turbine engine (10). Each outlet guide vane (50) defines a center of pressure (52) and a pitch axis (P). The pitch axis (P) of each outlet guide vane (50) is positioned forward the center of pressure (52) of each outlet guide vane (50) such that in the event of a mechanical failure, the outlet guide vane (50) defaults to a neutral position.

## Description

### FIELD OF THE INVENTION

The present subject matter relates generally to a turbine engine, or more particularly to a mounting system for variable pitch outlet guide vanes of a turbine engine.

### BACKGROUND OF THE INVENTION

A gas turbine engine generally includes a core having, in serial flow order, a compressor section, a combustion section, a turbine section, and an exhaust section. During operation, an engine airflow is provided to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the combustion section drives the compressor section and is then routed through the exhaust section, e.g., to atmosphere.

In particular configurations, the gas turbine engine additionally includes a fan mechanically coupled to the core and a plurality of outlet guide vanes. For example, the fan of such a gas turbine engine typically includes a plurality of rotatable blades driven by a shaft of the core. Rotation of the plurality of blades generates thrust for the gas turbine engine. Additionally, the plurality outlet guide vanes can direct an airflow from the blades to, e.g., reduce an amount of noise generated by the gas turbine engine and enhance a performance of the gas turbine engine.

In certain configurations, the plurality of outlet guide vanes are rotatable about respective pitch axes to further increase a performance of the gas turbine engine. The pitch axis of each respective outlet guide vane is aligned with a center of pressure defined by the respective outlet guide vane. Such a configuration may reduce an amount of rotational force on the respective outlet guide vane during operation of the gas turbine engine. However, in the event of a hardware failure with such a configuration, the outlet guide vanes may default to a pitched position. Such a configuration may greatly reduce a performance of the gas turbine engine. Supplemental hardware may be installed to prevent the outlet guide vanes from defaulting to a pitched position in the event of a failure, but such submental hardware can increase a cost and complexity of the gas turbine engine. Accordingly, a gas turbine engine including variable pitch outlet guide vanes that do not default to a pitched position in the event of a hardware failure would be beneficial.

### BRIEF DESCRIPTION OF THE INVENTION

Aspects and advantages of the invention will be set forth in part in the following description, or may be obvious from the description, or may be learned through practice of the invention.

In one exemplary embodiment of the present disclosure, a gas turbine engine defining an axial direction and a radial direction is provided. The gas turbine engine includes a core engine including an outer casing and a fan configured in mechanical communication with the core engine. The gas turbine engine also includes a plurality of outlet guide vanes positioned downstream from the fan along the axial direction and extending outwardly from the outer casing of the core engine generally along the radial direction. Each outlet guide vane defines a center of pressure and a pitch axis extending substantially parallel to the radial direction. The pitch axis of each outlet guide vane is positioned forward of the center of pressure of each outlet guide vane.

In another exemplary embodiment of the present disclosure, a gas turbine engine defining an axial direction and a radial direction is provided. The gas turbine engine includes a core engine and a fan positioned in flow communication with the core engine. The gas turbine engine also includes a plurality of outlet guide vanes positioned downstream from the fan along the axial direction, each outlet guide vane defining a center of pressure and a pitch change axis. The gas turbine engine also includes a pitch change mechanism configured to rotate one or more outlet guide vanes about their respective pitch axes within a pitch range. Each respective pitch axis is positioned forward of a respective center of pressure of the respective outlet guide vane through the pitch range such that the outlet guide vane defaults to a neutral position during operation of the gas turbine engine.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic, cross-sectional view of a gas turbine engine according to an exemplary embodiment of the present subject matter.
FIG. 2 is schematic, cross-sectional view of a forward end of the exemplary gas turbine engine of FIG. 1.
FIG. 3 is a cross-sectional view along a pitch axis of an outlet guide vane of the exemplary gas turbine engine of FIG. 1, in a non-pitched position.
FIG. 4 is a cross-sectional view along a pitch axis of an outlet guide vane of the exemplary gas turbine engine of FIG. 1, in a pitched position.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

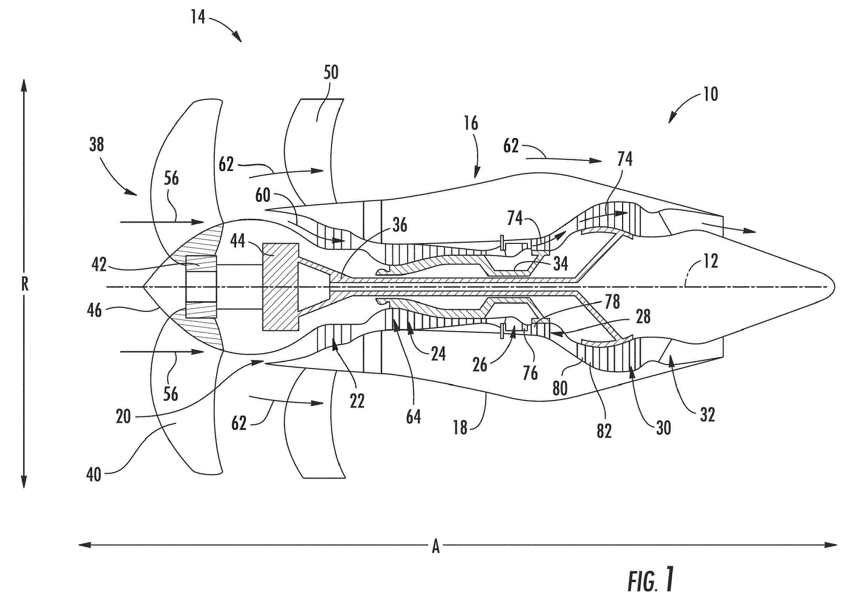

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. The turbofan engine 10 also defines a circumferential direction (not depicted). In general, the turbofan 10 includes a fan section 14 and a core engine 16, the fan section 14 configured in mechanical communication and positioned in flow communication with the core engine 16.

The exemplary core engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

Additionally, for the embodiment depicted, the fan section 14 includes a variable pitch fan 38 having a plurality of fan blades 40 coupled to a disk 42 in a spaced apart manner. As depicted, the fan blades 40 extend outwardly from the disk 42 generally along the radial direction R. The fan blades 40 and disk 42 are together rotatable about the longitudinal centerline 12 by LP shaft 36 across a power gear box 44. The power gear box 44 includes a plurality of gears for adjusting the rotational speed of the LP shaft 36. Additionally, for the embodiment depicted, the disk 42 of the variable pitch fan 38 is covered by a rotatable front hub 46 aerodynamically contoured to promote an airflow through the plurality of fan blades 40.

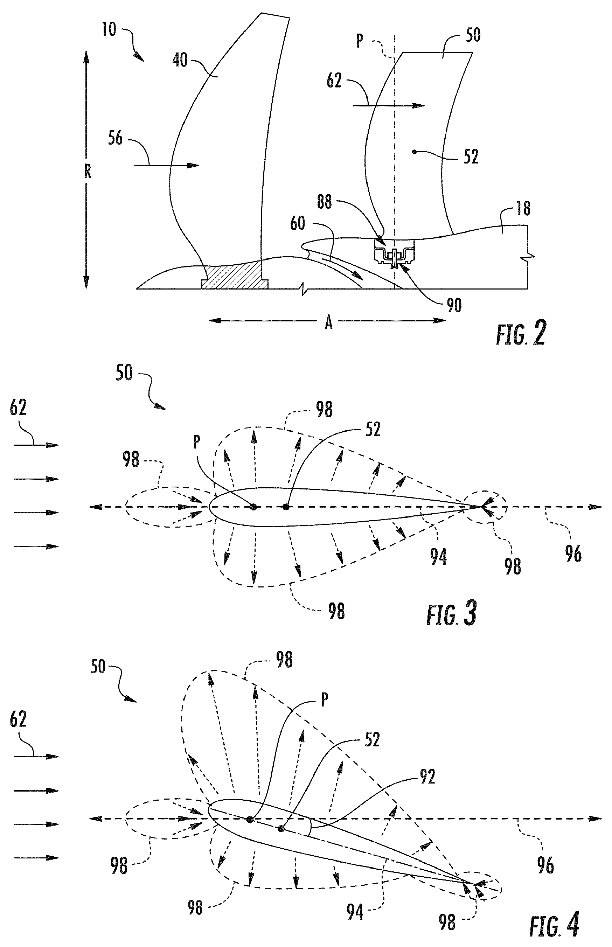

Referring still to the exemplary turbofan engine 10 of FIG. 1, the exemplary turbofan engine 10 additionally includes a plurality of circumferentially-spaced outlet guide vanes 50. The plurality of outlet guide vanes 50 are positioned downstream from the fan 38 along the axial direction A and extend outwardly from the outer casing 18 of the core engine 16 generally along the radial direction R. As will be discussed in greater detail below with reference to FIG. 2, each outlet guide vane 50 defines a center of pressure 52 and a pitch axis P extending substantially parallel to the radial direction R (FIG. 2). Notably, for the embodiment depicted, the turbofan engine 10 does not include any outer casing enclosing the fan section 14 and/or outlet guide vanes 50. Accordingly, for the embodiment depicted, the turbofan engine 10 may be referred to as an un-ducted single fan turbofan engine 10.

For the exemplary turbofan engine 10 depicted, the fan section 14, or more particularly, the rotation of the fan blades 40 of the fan section 14, provides a majority of the propulsive thrust of the turbofan engine 10. Additionally, the plurality of outlet guide vanes 50 are provided to increase an efficiency of the fan section 14 as well as to provide other benefits, such as, for example, decreasing an amount of noise generated by the turbofan engine 10.

During operation of the turbofan engine 10, a volume of air 56 passes over the plurality of blades 40 of the fan section 14. A first portion of the volume of air 56, i.e., the first portion of air 60, is directed or routed into an engine air flowpath 64 extending through the compressor section, the combustion section 26, the turbine section, and the exhaust section 32. Additionally, a second portion of the volume of air 56, i.e. a second portion of air 62, flows around the core engine 16, bypassing the core engine 16. The ratio between the second portion of air 62 and the first portion of air 60 is commonly known as a bypass ratio.

Referring still to FIG. 1, the pressure of the first portion of air 60 is increased as it is routed through the LP compressor 22 and subsequently through the HP compressor 24. The compressed first portion of air 60 is then provided to the combustion section 26, where it is mixed with fuel and burned to provide combustion gases 74. The combustion gases 74 are routed through the HP turbine 28 where a portion of thermal and/or kinetic energy from the combustion gases 74 is extracted via sequential stages of HP turbine stator vanes 76 that are coupled to the outer casing 18 and HP turbine rotor blades 78 that are coupled to the HP shaft or spool 34, thus causing the HP shaft or spool 34 to rotate, thereby supporting operation of the HP compressor 24. The combustion gases 74 are then routed through the LP turbine 30 where a second portion of thermal and kinetic energy is extracted from the combustion gases 74 via sequential stages of LP turbine stator vanes 80 that are coupled to the outer casing 18 and LP turbine rotor blades 82 that are coupled to the LP shaft or spool 36, thus causing the LP shaft or spool 36 to rotate, thereby supporting operation of the LP compressor 22 and/or rotation of the fan 38. The combustion gases 74 are subsequently routed through the jet exhaust nozzle section 32 of the core engine 16 to provide propulsive thrust to supplement propulsive thrust provided by the fan section 14.

Referring now to FIG. 2, a close-up, cross-sectional view of a forward end of the exemplary turbofan engine 10 of FIG. 1 is provided. As shown, the turbofan engine 10 additionally includes at least one attachment mechanism 88 attaching one or more of the outlet guide vanes 50 to the core engine 16. In certain exemplary embodiments, the turbofan engine 10 may include a plurality of attachment mechanisms 88, each individual attachment mechanism 88 attaching an individual outlet guide vane 50 the core engine 16. For example, the turbofan engine 10 may include a plurality of attachment mechanisms 88 configured in a generally annular ring attaching the plurality individual outlet guide vanes 50 the core engine 16. Alternatively, however, in other exemplary embodiments, the turbofan engine 10 may include a single attachment mechanism 88 configured to attach each of the plurality of outlet guide vanes 50 to the core engine 16.

Moreover, the turbofan engine 10 includes a pitch change mechanism 90 configured to rotate one or more of the outlet guide vanes 50 about their respective pitch axes P. For example, in certain exemplary embodiments, the pitch change mechanism 90 may include a rack and pinion gear system configured to rotate the plurality of outlet guide vanes 50 about their respective pitch axes P in unison. However, in other exemplary embodiments, any other suitable pitch change mechanism 90 may be provided. For example, in other exemplary embodiments, a plurality of dedicated pitch change mechanisms 90 may be provided, with each dedicated pitch change mechanism 90 configured to rotate an individual outlet guide vane 50 about its respective pitch axis P. The pitch change mechanism 90 may be generally configured to rotate one or more outlet guide vanes 50 between a non-pitched position, wherein the outlet guide vane 50 defines a pitch angle 92 of about zero degrees (FIG. 3), and a pitched position, wherein the outlet guide vane 50 defines a pitch angle 92 greater than or less than about zero (e.g., FIG. 4).

As previously stated, each of the outlet guide vanes 50 also defines a center of pressure 52. Moreover, as is indicated in FIG. 2, the pitch axis P of each outlet guide vane 50 is positioned forward of the center of pressure 52 for each outlet guide vane 50. As used herein, a first point is "positioned forward of" a second point when the first point is closer to a forward end of the turbofan engine 10 along the axial direction A than the second point. For example, the combustion section is positioned forward of the turbine section for the turbofan engine 10 depicted (FIG. 1). Such a configuration may ensure that the plurality of outlet guide vanes 50 default to a neutral position (i.e., a non-pitched position, FIG. 3) in the event of a mechanical failure during operation of the turbofan engine 10. Notably, as used herein, the center of pressure 52 defined by an outlet guide vane 50 refers to a point where the total sum of pressure fields act on the outlet guide vane 50, e.g., the point where all of the aerodynamic pressure on an outlet guide vane 50 may be represented by a single aerodynamic force vector with no moment.

Referring now to FIGS. 3 and 4, cross-sectional views are provided of the outlet guide vane 50 of FIG. 2 as viewed along its pitch axis P. For the embodiment of FIGS. 3 and 4, the outlet guide vane 50 is configured as a symmetrical airfoil generally having a "teardrop" shape. However, in other exemplary embodiments, the outlet guide vane 50 may instead define any other suitable symmetrical or nonsymmetrical shape or configuration. As stated, the outlet guide vanes 50 are configured to rotate about their respective pitch axes P. FIG. 3 depicts the outlet guide vane 50 of FIG. 2 in a non-pitched position, such that the outlet guide vane 50 defines a pitch angle 92 of about zero degrees. The pitch angle 92, as used herein refers to an angle defined between a cord line 94 of the outlet guide vane 50 and a reference plane 96 extending generally through the pitch axis P and along the axial direction A of the turbofan engine 10. The pressure fields 98 on each surface of the outlet guide vane 50 are depicted in phantom. When summed, the pressure fields 98 reveal the center of pressure 52 of the outlet guide vane 50, as is labeled. The pitch axis P of the outlet guide vane 50 is positioned forward of the center of pressure 52 of the outlet guide vane 50 when the outlet guide vane 50 is in the non-pitched position.

Moreover, referring now particularly to FIG. 4, the outlet guide vane 50 is depicted in a pitched position. For example, as discussed briefly above, the outlet guide vanes 50 may be configured to be rotated about their respective pitch axes P by the pitch change mechanism 90 to a desired pitch angle 92 within a pitch range (i.e., a range of possible pitch angels 92 of an outlet guide vane 50). In certain exemplary embodiments, the outlet guide vanes 50 may be configured to rotate about their respective pitch axes P to a pitch angle 92 of at least about plus or minus ten degrees (i.e., a pitch range of at least about twenty degrees), to a pitch angle 92 of at least about plus or minus fifteen degrees (i.e., a pitch range of at least about thirty degrees), to a pitch angle 92 of at least about plus or minus twenty degrees (i.e., a pitch range of at least about forty degrees), or to a pitch angle 92 of at least about plus or minus twenty-five degrees (i.e., a pitch range of at least about fifty degrees). For the embodiment of FIG. 4, the outlet guide vane 50 is depicted having been rotated about its pitch axis P to a pitch angle 92 of at least about plus twenty degrees. It should be appreciated, that as used herein, terms of approximation, such as "about" or "approximately," refer to being within a ten percent (10%) margin of error.

The pressure fields 98 on each surface of the outlet guide vane 50 depicted in FIG. 4 are again shown in phantom. When summed, the pressure fields 98 again reveal the center of pressure 52 of the outlet guide vane 50, as is labeled. Notably, the center of pressure 52 of the outlet guide vane 50 varies dependent on the pitch angle 92. More particularly, the center of pressure 52 of the outlet guide vane 50 generally moves forward-along the cord line 94 for the embodiment depicted-as the pitch angle 92 increases. However, for the embodiment depicted, the pitch axis P of the outlet guide vane 50 is still positioned forward of the center of pressure 52 even though the center of pressure 52 has moved forward along the cord line 94 of the outlet guide vane 50 (due to the increasing of the pitch angle 92 from rotating the outlet guide vane 50 about its pitch axis P to the pitched position). More particularly, each respective pitch axis P is positioned forward of a respective center of pressure 52 of a respective outlet guide vane 50 through the pitch range such that the outlet guide vane 50 defaults to a neutral position during operation of the turbofan engine 10.

A turbofan engine 10 having a plurality of outlet guide vanes 50 defining a pitch axis P forward of the center of pressure 52, whether the outlet guide van is in a pitched position or a non-pitched position, may provide for a safer engine. More particularly, in the event of a failure of, e.g., one or more pitch change mechanisms 90 configured with one or more of the plurality of outlet guide vanes 50, the affected outlet guide vanes 50 will default to a neutral position, or a non-pitched position (FIG. 3), such than an effect on the performance of the turbofan engine 10 will be minimized.

Furthermore, referring generally to FIGS. 2 through 4, the pitch axis P of each outlet guide vane 50 is positioned at least a minimum amount forward of the center of pressure 52 of the respective outlet guide vane 50 throughout the pitch range of the respective outlet guide vane 50. For example, in certain exemplary embodiments, the pitch axis P of each outlet guide vane 50 may be positioned at least about four inches forward of the center of pressure 52 of the respective outlet guide vane 50 through the pitch range of the respective outlet guide vane 50. In other exemplary embodiments, however, the pitch axis P of each outlet guide vane 50 may be positioned at least about eight inches, at least about twelve inches, or at least about sixteen inches forward of the center of pressure 52 of the respective outlet guide vane 50 through the pitch range of the respective outlet guide vane 50. Alternatively, in still other exemplary embodiments, the pitch axis P of each outlet guide vane 50 may be positioned less than about four inches forward of the center of pressure 52 of the respective outlet guide vane 50 through the pitch range of the respective outlet guide vane 50. Such a configuration may further ensure the outlet guide vane 50 defaults to a neutral position in the event of a mechanical failure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A gas turbine engine defining an axial direction and a radial direction, the gas turbine engine comprising:
   a core engine including an outer casing;
   a fan configured in mechanical communication with the core engine; and
   a plurality of outlet guide vanes positioned downstream from the fan along the axial direction and extending outwardly from the outer casing of the core engine generally along the radial direction, each outlet guide vane defining a center of pressure and a pitch axis extending substantially parallel to the radial direction, the pitch axis of each outlet guide vane being positioned forward of the center of pressure of each outlet guide vane.
2. The gas turbine engine of clause 1, wherein the plurality of outlet guide vanes define a pitch angle, and wherein the plurality of outlet guide vanes are configured to rotate about their respective pitch axes to a pitch angle of at least about plus or minus ten degrees.
3. The gas turbine engine of clause 1 or 2, wherein the center of pressure of each outlet guide vane in the plurality of outlet guide vanes varies dependent on the respective pitch angle, and wherein the pitch axis of each outlet guide vane is positioned forward of the center of pressure of the respective outlet guide vane when the pitch angle of the respective outlet guide vane is between about minus ten degrees and about plus ten degrees.
4. The gas turbine engine of any preceding clause, wherein the plurality of outlet guide vanes define a pitch angle, and wherein the plurality of outlet guide vanes are configured to rotate about their respective pitch axes to a pitch angle of at least about plus or minus twenty degrees.
5. The gas turbine engine of any preceding clause, wherein the center of pressure of each outlet guide vane in the plurality of outlet guide vanes varies dependent on the respective pitch angle, and wherein the pitch axis of each outlet guide vane is positioned forward of the center of pressure of the respective outlet guide vane when the pitch angle of the respective outlet guide vane is between about minus twenty degrees and about plus twenty degrees.
6. The gas turbine engine of any preceding clause, further comprising
   an attachment mechanism attaching one or more outlet guide vanes to the core engine and configured to allow for rotation of the one or more outlet guide vanes about a respective pitch axis.
7. The gas turbine engine of any preceding clause, further comprising
   a pitch change mechanism configured to rotate one or more outlet guide vanes about their respective pitch axes.
8. The gas turbine engine of any preceding clause, wherein the fan is positioned forward of the core engine along the axial direction and in flow communication with the core engine.
9. The gas turbine engine of any preceding clause, wherein the pitch axis of each outlet guide vane is positioned at least a minimum amount forward of the center of pressure of the respective outlet guide vane through a pitch range of the respective outlet guide vane, and wherein the minimum amount is at least about four inches.
10. The gas turbine engine of any preceding clause, wherein the gas turbine engine is an unducted single fan gas turbine engine.
11. The gas turbine engine of any preceding clause, wherein the fan is a variable pitch fan.
12. A gas turbine engine defining an axial direction and a radial direction, the gas turbine engine comprising:
   a core engine;
   a fan positioned in flow communication with the core engine;
   a plurality of outlet guide vanes positioned downstream from the fan along the axial direction, each outlet guide vane defining a center of pressure and a pitch change axis; and
   a pitch change mechanism configured to rotate one or more outlet guide vanes about their respective pitch axes within a pitch range, each respective pitch axis being positioned forward of a respective center of pressure of the respective outlet guide vane through the pitch range such that the outlet guide vane defaults to a neutral position during operation of the gas turbine engine.
13. The gas turbine engine of any preceding clause, wherein the pitch range is at least about twenty degrees.
14. The gas turbine engine of any preceding clause, wherein the pitch range is at least about forty degrees.
15. The gas turbine engine of any preceding clause, further comprising
   an attachment mechanism attaching one or more outlet guide vanes to the core engine and configured to allow for rotation of the one or more outlet guide vanes about their respective pitch axes.
16. The gas turbine engine of any preceding clause, wherein the fan is configured in mechanical communication with the core engine.
17. The gas turbine engine of any preceding clause, wherein the fan is positioned forward of the core engine along the axial direction.
18. The gas turbine engine of any preceding clause, wherein the pitch axis of each outlet guide vane is positioned at least a minimum amount forward of the center of pressure of the respective outlet guide vane through the pitch range of the respective outlet guide vane, and wherein the minimum amount is at least about four inches.
19. The gas turbine engine of any preceding clause, wherein the gas turbine engine is an unducted single fan gas turbine engine.
20. The gas turbine engine of any preceding clause, wherein the fan is a variable pitch fan.

## Claims

1. A gas turbine engine (10) defining an axial direction (A) and a radial direction (R), the gas turbine engine (10) comprising:
a core engine (16) including an outer casing (18);
a fan (38) configured in mechanical communication with the core engine (16); and
a plurality of outlet guide vanes (50) positioned downstream from the fan (38) along the axial direction (A) and extending outwardly from the outer casing (18) of the core engine (16) generally along the radial direction (R), each outlet guide vane (50) defining a center of pressure (52) and a pitch axis (P) extending substantially parallel to the radial direction (R), the pitch axis (P) of each outlet guide vane (50) being positioned forward of the center of pressure (52) of each outlet guide vane (50).

2. The gas turbine engine (10) of claim 1, wherein the plurality of outlet guide vanes (50) define a pitch angle (92), and wherein the plurality of outlet guide vanes (50) are configured to rotate about their respective pitch axes (P) to a pitch angle (92) of at least about plus or minus ten degrees.

3. The gas turbine engine (10) of claim 2, wherein the center of pressure (52) of each outlet guide vane (50) in the plurality of outlet guide vanes (50) varies dependent on the respective pitch angle (92), and wherein the pitch axis (P) of each outlet guide vane (50) is positioned forward of the center of pressure (52) of the respective outlet guide vane (50) when the pitch angle (92) of the respective outlet guide vane (50) is between about minus ten degrees and about plus ten degrees.

4. The gas turbine engine (10) of any of claims 1 to 3, wherein the plurality of outlet guide vanes (50) define a pitch angle (92), and wherein the plurality of outlet guide vanes (50) are configured to rotate about their respective pitch axes (P) to a pitch angle (92) of at least about plus or minus twenty degrees.

5. The gas turbine engine (10) of claim 4, wherein the center of pressure (52) of each outlet guide vane (50) in the plurality of outlet guide vanes (50) varies dependent on the respective pitch angle (92), and wherein the pitch axis (P) of each outlet guide vane (50) is positioned forward of the center of pressure (52) of the respective outlet guide vane (50) when the pitch angle (92) of the respective outlet guide vane (50) is between about minus twenty degrees and about plus twenty degrees.

6. The gas turbine engine (10) of any preceding claim, further comprising
an attachment mechanism (88) attaching one or more outlet guide vanes (50) to the core engine (16) and configured to allow for rotation of the one or more outlet guide vanes (50) about a respective pitch axis (P).

7. The gas turbine engine (10) of any preceding claim, further comprising
a pitch change mechanism (90) configured to rotate one or more outlet guide vanes (50) about their respective pitch axes (P).

8. The gas turbine engine (10) of any preceding claim, wherein the fan (38) is positioned forward of the core engine (16) along the axial direction (A) and in flow communication with the core engine (16).

9. The gas turbine engine (10) of any preceding claim, wherein the pitch axis (P) of each outlet guide vane (50) is positioned at least a minimum amount forward of the center of pressure (52) of the respective outlet guide vane (50) through a pitch range of the respective outlet guide vane (50), and wherein the minimum amount is at least about four inches.

10. The gas turbine engine (10) of any preceding claim, wherein the gas turbine engine (10) is an unducted single fan gas turbine engine (10).

11. The gas turbine engine of any preceding claim, wherein the fan (38) is a variable pitch fan.

12. The gas turbine engine of claim 1, wherein the fan (38) is positioned in flow communication with the core engine (16), and further comprising:
a pitch change mechanism configured to rotate one or more outlet guide vanes (50) about their respective pitch axes (P) within a pitch range, each respective pitch axis (P) being positioned forward of the respective center of pressure (52) of the respective outlet guide vane (50) through the pitch range such that the outlet guide vane (50) defaults to a neutral position during operation of the gas turbine engine (10).
